Europäisches Patentamt

European Patent Office

Office européen des brevets

(19)

(11) **EP 1 226 472 B1**

(12) **EUROPÄISCHE PATENTSCHRIFT**

| | |
|---|---|
| (45) Veröffentlichungstag und Bekanntmachung des Hinweises auf die Patenterteilung: **06.05.2004 Patentblatt 2004/19** | (51) Int Cl.⁷: $G05B\ 13/04$ |
| (21) Anmeldenummer: **00967727.9** | (86) Internationale Anmeldenummer: **PCT/EP2000/009232** |
| (22) Anmeldetag: **21.09.2000** | (87) Internationale Veröffentlichungsnummer: **WO 2001/023967 (05.04.2001 Gazette 2001/14)** |

(54) **VERFAHREN ZUR ERMITTLUNG VON ZEITKONSTANTEN EINES REFERENZMODELLES IN EINER KASKADIERTEN REGELUNGSANORDNUNG**

METHOD FOR DETERMINING TIME CONSTANTS OF A REFERENCE MODEL IN A CASCADE REGULATING CIRCUIT

PROCEDE POUR DETERMINER DES CONSTANTES DE TEMPS D'UN MODELE DE REFERENCE DANS UN SYSTEME DE REGULATION EN CASCADE

| | |
|---|---|
| (84) Benannte Vertragsstaaten: **DE FR GB IT** | (56) Entgegenhaltungen: |
| | EP-A- 0 896 263 WO-A-00/22485 |
| (30) Priorität: **24.09.1999 DE 19945748** | DE-A- 3 811 086 US-A- 4 549 123 |
| | US-A- 5 157 597 |
| (43) Veröffentlichungstag der Anmeldung: **31.07.2002 Patentblatt 2002/31** | • OTT M G ET AL: "AUTO-TUINING: FROM ZIEGLER-NICHOLS TO MODEL BASED RULES" , ADVANCES IN INSTRUMENTATION AND CONTROL,US,INSTRUMENT SOCIETY OF AMERICA, RESEARCH TRIANGLE PARK, VOL. 50, NR. PART 02, PAGE(S) 323-332 XP000540648 ISSN: 1054-0032 das ganze Dokument |
| (73) Patentinhaber: **Dr. Johannes Heidenhain GmbH 83292 Traunreut (DE)** | |
| (72) Erfinder: **KERNER, Norbert 83374 Traunwalchen (DE)** | |

**Beschreibung**

Die vorliegende Erfindung betrifft ein Verfahren zur Ermittlung von mindestens einer Zeitkonstanten eines Referenzmodelles in einer kaskadierten Regelungsanordnung nach dem Oberbegriff des Anspruches 1.

In numerisch gesteuerten Werkzeugmaschinen wird üblicherweise eine kaskadierte Regelungsstruktur, bestehend aus Lage-, Drehzahl- und Stromregler eingesetzt. Der dem Lageregler nachgeordnete Drehzahlregler ist in der Regel als PI-Drehzahlregler ausgebildet, der einen Proportionalzweig (P) und einen Integralzweig (I) umfasst. Aufgrund des Einflusses des Integralzweiges des Drehzahlreglers wird der Phasengang des vorgeordneten Lagereglers verschlechtert. Daher muss als Konsequenz der Verstärkungsfaktor kV des Lagereglers a priori reduziert werden, um Schwingungen in den durch die Regelung geregelten Antriebssystemen der Werkzeugmaschine zu vermeiden. Wünschenswert ist jedoch grundsätzlich ein möglichst großer Verstärkungsfaktor kV des Lagereglers.

Zur Lösung dieser Probleme ist im Seminarvortrag von P. Ernst, G. Heinemann mit dem Titel "Optimierte Achsregelungen mit durchgängig offenen CNC-Steuerungen" (ISW Lageregelseminar 1999; 26., 27.3.1999) in Kapitel 2.2 bereits vorgeschlagen worden, dem Drehzahlregler ein Referenzmodell vorzuordnen. Das Referenzmodell, ausgebildet als Verzögerungsglied 2. Ordnung, ist dem Verhalten des geschlossenen Drehzahlreglers ohne Integralanteil angepasst. Auf diese Art und Weise lässt sich der ungünstige Einfluss des Integralanteiles auf das Führungsverhalten des Drehzahlreglers eliminieren bzw. zumindest minimieren. Die erwünschte Ausregelung von Störungen ohne Integralanteil bleibt jedoch weiterhin voll erhalten. In Bezug auf die geeignete Parametrierung, insbesondere die Bestimmung geeigneter Zeitkonstanten, eines entsprechenden Referenzmodelles 2. Ordnung finden sich in der angegebenen Literaturstelle jedoch keine weiteren Hinweise.

Aufgabe der vorliegenden Erfindung ist es daher, ein Verfahren zur Ermittlung von mindestens einer Zeitkonstanten eines Referenzmodelles 2. Ordnung anzugeben, welches in einer kaskadierten Regelungsanordnung einer Maschine zwischen einem Lageregler und einem Drehzahlregler angeordnet ist und ein optimiertes Führungsverhalten der Regelungsanordnung sicherstellt.

Diese Aufgabe wird gelöst durch ein Verfahren mit den Merkmalen im kennzeichnenden Teil des Anspruches 1.

Vorteilhafte Ausführungsformen des erfindungsgemäßen Verfahrens ergeben sich aus den Maßnahmen in den abhängigen Ansprüchen.

Über das erfindungsgemäße Verfahren ist nunmehr die Parametrierung eines geeigneten Referenzmodelles 2. Ordnung für verschiedenste Maschinentypen möglich. Hierbei stellt das resultierende Referenzmodell jeweils sicher, dass zumindest der unerwünschte Einfluss des Integralanteiles des Drehzahlreglers auf das Führungsverhalten eliminiert wird.

Je nach Maschinentyp werden eine Zeitkonstante oder zwei Zeitkonstanten erfindungsgemäß ermittelt, die das Verhalten des Referenzmodelles bestimmen und damit das Führungsverhalten der Regelungsanordnung im eigentlichen Regelungsbetrieb beeinflussen. Grundsätzlich wird erfindungsgemäß jedoch zumindest die sog. zweite Zeitkonstante des Referenzmodelles in Abhängigkeit einer erfassten Schwingungsfrequenz einer ungedämpften Maschinenschwingung ermittelt.

Über das erfindungsgemäße Vorgehen zur Bestimmung der Zeitkonstanten können nunmehr überraschenderweise bzw. entgegen theoretischen Überlegungen auch Regelstrecken mit Totzeiten und Verzögerungsgliedern für Maschinen kompensiert werden, die theoretisch Referenzmodelle höherer Ordnung benötigen würden; insbesondere gilt dies für die oben erwähnten zweite Kategorie von nicht-steifen Maschinen mit dominanter Eigenfrequenz. Für derartige Maschinen würde das Bestimmen von theoretisch exakten Referenzmodellen n-ter Ordnung (n > 2) mit einem sehr großen Aufwand verbunden sein. Demgegenüber kann durch die Verwendung von Verzögerungsgliedern zweiter Ordnung als Referenzmodell, deren Zeitkonstanten erfindungsgemäß bestimmt werden, der resultierende Aufwand zur Parametrierung des Referenzmodelles gering gehalten werden.

Das erfindungsgemäße Verfahren kann sowohl manuell als auch automatisiert erfolgen.

Weitere Vorteile sowie Einzelheiten des erfindungsgemäßen Verfahrens ergeben sich aus der nachfolgenden Beschreibung von Ausführungsbeispielen anhand der beiliegenden Figuren.

Dabei zeigt

Figur 1       eine Blockschaltbild-Darstellung eines Teiles der kaskadierten Regelungsstruktur einer numerisch gesteuerten Werkzeugmaschine;

Figur 2a und 2b       je ein Flussdiagramm zur Erläuterung der erfindungsgemäßen Ermittlung der Zeitkonstanten eines Referenzmodelles 2. Ordnung,

Figur 3 - 21       jeweils verschiedene Darstellungen, die im ANHANG näher erläutert werden.

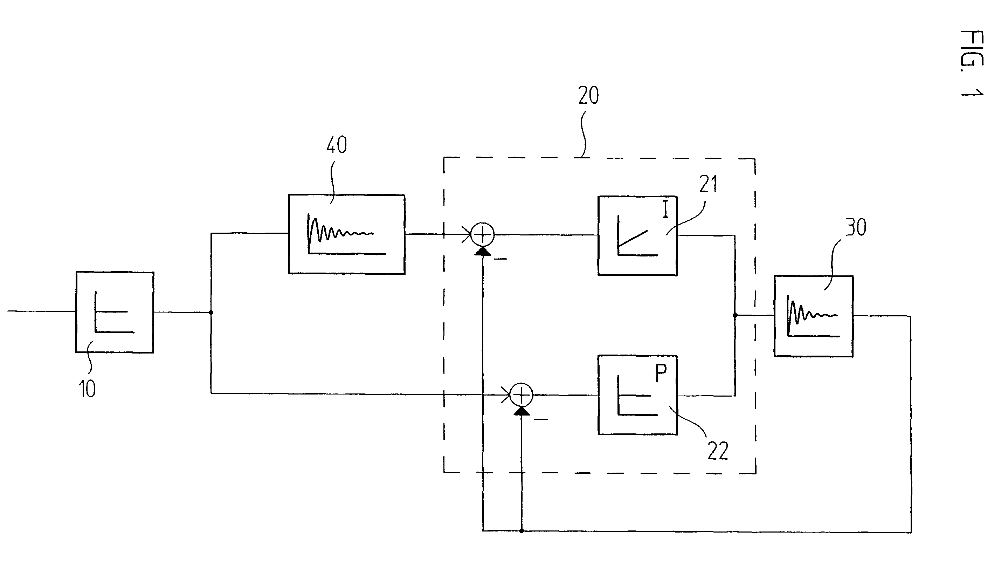

Figur 1 zeigt in stark schematisierter Form eine Blockschaltbild-Darstellung eines Teiles der kaskadierten Regelungsstruktur einer numerisch gesteuerten Werkzeugmaschine, wie sie z.B. in ähnlicher Form aus der oben diskutierten Literaturstelle bekannt ist.

Der dargestellte Teil der Regelungsstruktur umfasst einen Lageregler 10 sowie einen nachgeordneten Drehzahlregler 20. Dem Drehzahlregler 20 nachgeordnet ist die eigentliche Regelstrecke 30, die lediglich schematisch angedeutet wird. Der Drehzahlregler ist im vorliegenden Beispiel als PI-Regler (Proportional-Integral-Regler) ausgebildet; der Integralzweig 21 sowie der Proportionalzweig 22 des Drehzahlreglers 20 sind in Figur 1 separat voneinander dargestellt. Zwischen dem Lageregler 10 und dem Drehzahlregler 20 ist ein Referenzmodell 40 angeordnet, das als Verzögerungsglied 2. Ordnung ausgebildet ist, d.h. als sogenanntes PT2-Glied. Das Referenzmodell 40 ist dem Verhalten des geschlossenen Drehzahlreglers 20 ohne Integralanteil nachgebildet und gewährleistet derart, dass zumindest der unerwünschte Einfluss des Integralanteiles bzw. Integralzweiges 21 auf das Führungsverhalten des Drehzahlreglers 20 eliminiert wird. Wie oben bereits angedeutet können über das nachfolgend noch zu erläuternde Vorgehen überraschenderweise auch Referenzmodelle parametriert werden, die Regelstrecken mit Totzeiten und Verzögerungsgliedern kompensieren. Theoretisch müssten für derartige Regelstrecken Referenzmodelle mit Ordnungen n > 2 parametriert werden, was relativ aufwendig wäre.

Die Übertragungsfunktion H(s) des als Verzögerungsglied 2. Ordnung ausgebildeten Referenzmodelles 40 ergibt sich in bekannter Art und Weise gemäß nachfolgender Gleichung (1):

$$H(s) = K / (1 + T1 * s + (T2)^2 * s^2) \hspace{3cm} \text{Gl. (1)}$$

Entscheidend für die Auslegung bzw. Parametrierung des Referenzmodelles 40 sind die beiden Zeitkonstanten T1 und T2. Diese müssen in Abhängigkeit der jeweiligen Maschinen- bzw. Regelungs-Gegebenheiten ermittelt werden.

Entgegen theoretischen Überlegungen hat sich nun gezeigt, dass die Verwendung von Referenzmodellen 2. Ordnung, deren Zeitkonstanten T1 und T2 erfindungsgemäß bestimmt werden, selbst dann möglich ist, wenn das jeweilige System eigentlich über ein Referenzmodell höherer Ordnung n, d.h. n > 2, nachgebildet werden müsste. Die mathematisch exakte Abbildung eines derartigen, komplexen Systemes durch ein entsprechendes Referenzmodell n-ter Ordnung würde jedoch grundsätzlich einen extrem hohen Rechenaufwand verursachen. In der Praxis hat dies zur Folge, dass durch die Verwendung eines Referenzmodelles 2. Ordnung, dessen Zeitkonstanten T1 und T2 erfindungsgemäß bestimmt werden, auch das Führungsverhalten des Drehzahlreglers 20 für Maschinen optimiert werden kann, die zur bereits oben diskutierten zweiten Kategorie gehören. Hierbei wird durch den Einsatz eines erfindungsgemäß parametrierten Referenzmodelles 2. Ordnung in diesen Systemen nicht nur der Einfluss des Integralzweiges des Drehzahlreglers eliminiert, sondern darüberhinaus noch der Einfluss zusätzlicher Verzögerungen bzw. Totzeiten in der Regelstrecke minimiert. Überraschenderweise lassen sich in derartigen Systemen mit erfindungsgemäß parametrierten Referenzmodellen 2. Ordnung auch Verstärkungsfaktoren kV verwenden, die größer sind als mögliche Verstärkungsfaktoren kV bei nicht-vorhandenem bzw. ausgeschaltetem Integralzweig im Drehzahlregler.

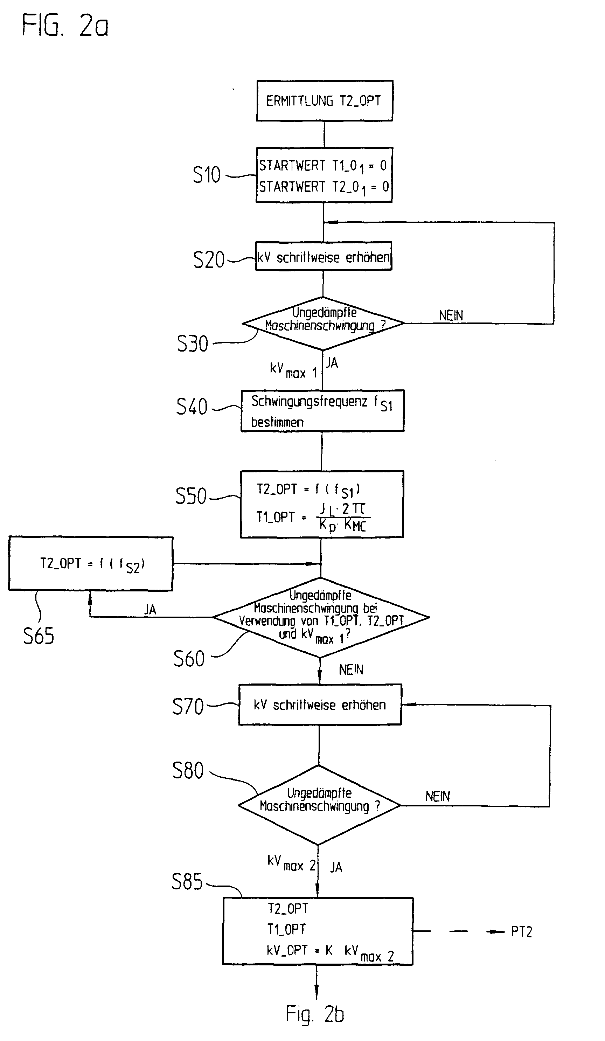

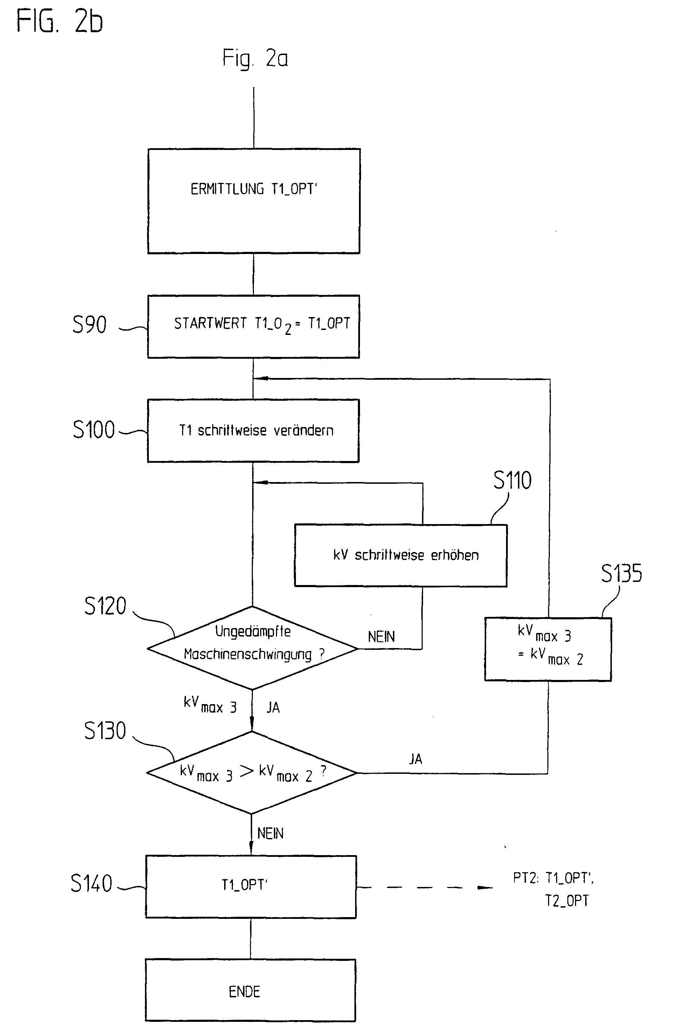

Anhand der Flussdiagramme in den Figuren 2a und 2b sei nunmehr das erfindungsgemäße Vorgehen zur Ermittlung der Zeitkonstanten T1, T2 für das Referenzmodell 2. Ordnung erläutert.

Im ersten Teil des nachfolgend erläuterten Verfahrens, dargestellt in Figur 2a, wird hierbei zunächst die zweite Zeitkonstante T2 bzw. ein entsprechend optimierter Wert T2_OPT der zweiten Zeitkonstanten T2 ermittelt.

In einem ersten Verfahrensschritt S10 erfolgt zunächst die Bestimmung bzw. Vorgabe von Startwerten $T1\_0_1$ und $T2\_0_1$ für die erste und zweite Zeitkonstante T1, T2. Im vorliegenden Beispiel werden die Startwerte $T1\_0_1$ und $T2\_0_1$ gemäß $T1\_0_1 = 0$ und $T2\_0_1 = 0$ gewählt. Für das Gesamtsystem bedeutet diese Wahl der Startwerte $T1\_0_1$ und $T2\_0_1$ letztlich, dass das Referenzmodell 2. Ordnung in der Regelungsanordnung ausgeschaltet wird bzw. nicht aktiv ist.

Nachfolgend wird in den Schritten S20 und S30 der Verstärkungsfaktor kV des Lagereglers schrittweise erhöht und nach jeder Erhöhung überprüft, ob bereits eine Schwingung der jeweiligen Maschine erkennbar ist. Dies erfolgt solange, bis bei einem ersten maximalen Verstärkungsfaktor $kV_{max1}$ eine nahezu ungedämpfte Schwingung der Maschine mit einer bestimmten Schwingungsfrequenz $f_{S1}$ registrierbar ist.

Ist eine entsprechende ungedämpfte Schwingung der Maschine registrierbar, so wird gemäß dem Verfahrensschritt S40 die zugehörige Schwingungsfrequenz $f_{S1}$ gemessen bzw. bestimmt.

Anschließend können im Verfahrensschritt S50 die beiden optimierten Werte T2_OPT und T1_OPT für die beiden Zeitkonstanten T1, T2 bestimmt werden. Hierbei lässt sich der optimierte Wert T2_OPT für die zweite Zeitkonstante T2 als Funktion der in Schritt S40 ermittelten Schwingungsfrequenz $f_{S1}$ bestimmen, d.h.

$$T2\_OPT = f(f_{S1}) = 1 / (2 * \pi * f_{S1}) \qquad \text{Gl. (2).}$$

Der optimierte Wert T1_OPT für die erste Zeitkonstante T1 ergibt sich aus vorgegebenen System-Parametern gemäß folgender Beziehung:

$$T1\_OPT = (J_L * 2 * \pi) / (k_P * K_{MC}) \qquad \text{Gl. (3),}$$

wobei

$J_L$:     Lastmoment,
$k_P$:     Verstärkungsfaktor des Proportionalzweiges des Drehzahlreglers,
$K_{MC}$:     Motorkonstante.

Nachfolgend wird in den Verfahrensschritten S60 - S85 überprüft, ob die vorher ermittelten Zeitkonstanten T1, T2 des Referenzmodelles 2. Ordnung das gewünschte Führungsverhalten im Regelungsbetrieb gewährleisten. Zudem wird in diesen Verfahrensschritten ein maximaler Verstärkungsfaktor kV des Lagereglers für die optimierten Zeitkonstanten T1_OPT, T2_OPT bestimmt.

Hierzu wird im Verfahrensschritt S60 zunächst überprüft, ob im System bei der Verwendung der vorher ermittelten optimierten Werte T1_OPT, T2_OPT und dem im Schritt S30 ermittelten ersten maximalen Verstärkungsfaktor $kV_{max1}$ eine ungedämpfte Schwingung der Maschine resultiert.

Ist dies nicht der Fall, so wird gemäß den Verfahrensschritten S70 und S80 der Verstärkungsfaktor kV schrittweise solange erhöht, bis eine ungedämpfte Maschinenschwingung bei einem Verstärkungsfaktor $kV_{max2}$ registrierbar ist. Der derart ermittelte maximale Verstärkungsfaktor $kV_{max2}$, bei dem in Verbindung mit den Zeitkonstanten T1_OPT und T2_OPT des Referenzmodelles 2. Ordnung eine ungedämpfte Maschinenschwingung auftritt, wird anschließend im Verfahrensschritt S85 noch mit einem Sicherheitsfaktor K < 1 multipliziert. Hieraus ergibt sich dann der für ein stabiles System im Regelungsbetrieb verwendbare optimierte Verstärkungsfaktor kV_OPT für den Lageregler, d.h.

$$kV\_OPT = K * kV_{max2} \qquad \text{(Gl. 4).}$$

Der Sicherheitsfaktor K kann z.B. K = 0.6 gewählt werden, um derart eine ausreichende Stabilität des Lagereglers sicherzustellen.

Ergibt sich im Verfahrensschritt S60 hingegen, dass bei der Verwendung der vorher optimierten Zeitkonstanten T1_OPT, T2_OPT im Referenzmodell und dem Verstärkungsfaktor $kV_{max1}$ bereits eine ungedämpfte Maschinenschwingung bei einer Schwingungsfrequenz $f_{S2}$ resultiert, so wird die Schwingungsfrequenz $f_{S2}$ ermittelt und im Verfahrenschritt S65 erneut eine optimierte Zeitkonstante T2_OPT als Funktion der Schwingungsfrequenz $f_{S2}$ bestimmt gemäß

$$T2\_OPT = f(f_{S2}) = 1 / (2 * \pi * f_{S2}) \qquad \text{Gl. (2').}$$

Ggf. wird das Bestimmen einer optimierten Zeitkonstante T2_OPT in den Verfahrensschritten S60 und S65 mehrmals wiederholt, bis letztlich bei den gewählten Parametern T1_OPT, T2_OPT und $kV_{max1}$ keine ungedämpfte Maschinenschwingung mehr registrierbar ist.

Im Fall von Maschinen der ersten Kategorie ist nach diesem Vorgehen das Referenzmodell zweiter Ordnung grundsätzlich parametriert, d.h. die beiden Zeitkonstanten T1 und T2 ermittelt. Soll die Regelungsstruktur einer Maschine der zweiten Kategorie optimiert werden, so sind weitere Verfahrensschritte erforderlich, um insbesondere die erste Zeitkonstante T1 des Referenzmodelles geeignet zu optimieren. Dies sei nachfolgend anhand der Figur 2b erläutert.

Selbstverständlich können die nachfolgenden Schritte zur Ermittlung einer geeigneten ersten Zeitkonstante T1 auch bei den erwähnten Maschinen der ersten Kategorie durchgeführt werden, um derart zu überprüfen, ob der gemäß obiger Gl. (3) eingestellte Wert für T1_OPT ein akzeptables Systemverhalten liefert.

So wird zur Ermittlung eines optimierten Wertes T1_OPT' der ersten Zeitkonstante T1 im Verfahrensschritt S90 zunächst ein zweiter Startwert $T1\_0_2$ für die erste Zeitkonstante T1 festgelegt. Hierbei wird als zweiter Startwert $T1\_0_2$ der gemäß Gl. (3) in Schritt S50 bestimmte Wert für T1 verwendet, d.h. $T1\_0_2 = T1\_OPT$.

Nachfolgend wird gemäß Verfahrensschritt S100 die erste Zeitkonstante T1 verändert, z.B. erhöht und im Verfahrensschritt S120 anschließend überprüft, ob bereits wieder eine ungedämpfte Maschinenschwingung registrierbar ist. Neben dem Erhöhen der ersten Zeitkonstante T1 im Schritt S100 wäre grundsätzlich auch denkbar, dass diese verringert wird.

Solange keine ungedämpfte Maschinenschwingung registrierbar ist, wird gemäß den Verfahrensschritten S110 und S120 schrittweise der Verstärkungsfaktor kV bis zu einem Verstärkungsfaktor $kV_{max3}$ erhöht, bei dem eine ungedämpfte Maschinenschwingung registrierbar ist.

Im Verfahrensschritt S130 wird daraufhin überprüft, ob der derart ermittelte Verstärkungsfaktor $kV_{max3}$ größer als der bis zu diesem Zeitpunkt maximale Verstärkungsfaktor $kV_{max2}$ ist.

Sofern der Verstärkungsfaktor $kV_{max3}$ größer als der bislang maximale Verstärkungsfaktor $kV_{max2}$ ist, wird der Verstärkungsfaktor $kV_{max3} = kV_{max2}$ gesetzt und es erfolgt über ein nochmaliges Durchlaufen der Verfahrensschritte ab Schritt S100. Das heißt, es wird letztlich überprüft, ob mit einem veränderten Wert für T1_OPT möglicherweise ein höherer Wert für den Verstärkungsfaktor kV eingestellt werden kann.

Dies erfolgt solange, bis im Verfahrensschritt S130 festgestellt wird, dass der Verstärkungsfaktor $kV_{max3}$ nicht mehr größer als im vorherigen Durchlauf ermittelte Verstärkungsfaktor $kV_{max2}$ ist.

Der dann vorliegende Wert für die erste Zeitkonstante T1 wird gemäß Verfahrensschritt S140 als optimierter Wert T1_OPT neben dem bereits vorher bestimmten Wert T2_OPT zur Parametrierung des Referenzmodelles 2. Ordnung verwendet.

Ferner wird ähnlich zum Vorgehen in Fig. 2a der zuletzt ermittelte maximale Verstärkungsfaktor $kV_{max2}$ mit einem Korrekturfaktor K < 1 multipliziert, um wiederum die Stabilität des Lagereglers sicherzustellen, d.h. der optimierte Wert kV_OPT für den Verstärkungsfaktor des Lagereglers ergibt sich wiederum zu

$$kV\_OPT = K * kV_{max2} \hspace{4cm} \text{Gl. (5).}$$

Neben den beiden ermittelten Parametern T1 und T2 für das einzusetzende Referenzmodell 2. Ordnung liegt somit nunmehr auch ein optimierter, maximaler Verstärkungsfaktor kV_OPT für den Lageregler vor, der im nachfolgenden Regelungsbetrieb einsetzbar ist.

Selbstverständlich existieren im Rahmen der vorliegenden Erfindung auch alternative Ausführungsformen.

Im nachfolgenden ANHANG werden anschließend die der vorliegenden Erfindung zugrundeliegenden theoretischen Überlegungen näher erläutert sowie verschiedene Simulations- und Versuchsergebnisse präsentiert.


**ANHANG**

(THEORIE, SIMULATION UND VERSUCHSERGEBNISSE)


**1. Simulation mit vereinfachtem Reglermodell**


**1.1 Modell der Regelstrecke**

Es wurde das erfindungsgemässe Verfahren und die erfindungsgemässe Anordnung anhand einer mathematischen Simulation getestet. Diese Simulation, die neben dem mathematischen Maschinenmodell auch das mathematische Modell der Erfindung beinhaltet wird im folgenden beschrieben.

Das Massenträgheitsmoment der Regelstrecke ist zusammen mit der Momentenkonstante des Motors die bestimmende Kenngröße des Systems. Dabei werden folgende Parameter verwendet:

$$\text{Massenträgheit} \hspace{2cm} J_I = 50\,kgcm^2$$

$$\text{Motorkonstante} \hspace{2cm} k_{MC} = \frac{1.5}{\sqrt{2}}\,\frac{Nm}{A_{eff}}$$

Somit ist die Regelstrecke G(s) bestimmt durch:

$$G(s) = \frac{num}{den} = \frac{1}{J * s}$$

Die Umrechnung von Kreisfrequenz ω nach U/s erfolgt durch ein nachgeschaltetes P-Glied mit 1 / (2 \* Π). Über den Eingang "Störmoment Ms" kann eine Störung eingespeist werden, die gleichzeitig auf die Momentengröße und die Istdrehzahl wirkt. Dies soll einer typischen Störung durch Fräser-Eingriff entsprechen und dient der Beurteilung der Störsteifigkeit.

Um realistische drehzahlabhängige Verluste zu simulieren, erfolgt noch eine Rückführung k'p des internen Streckenausganges auf den Momenten-Summierungspunkt. Dadurch entsteht eine neue Regelstrecke G'(s).

$$G'(s) = \frac{\dfrac{1}{J * s}}{1 + k'_p * \dfrac{1}{J * s}}$$

$$G'(s) = \frac{1}{k'_p + J * s}$$

$$G'(s) = \frac{1}{k'_p} * \frac{1}{1 + \dfrac{J}{k'_p} * s}$$

Durch diese Rückführung entsteht ein TP1-Regler.

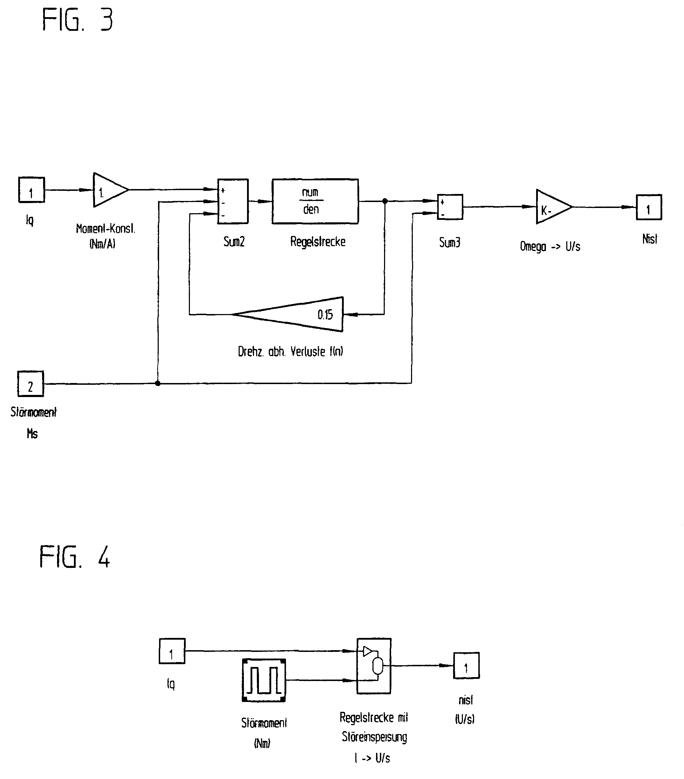

In Figur 3 ist ein Modell der Regelstrecke 1. Ordnung mit Störeinspeisung dargestellt.

## 1.2 Modell der gestörten Regelstrecke

Ein Modell der gestörten Regelstrecke ist in Figur 4 in schematischer Form dargestellt. Die Regelstrecke wird mit einem Störpuls von 2 Nm und einer Dauer von 70 ms beaufschlagt. Der Startzeitpunkt liegt bei 40 ms.
Diese gestörte Regelstrecke wird als Gruppe "Gestörte Regelstrecke A -> U/s" in eine Simulation eingebunden.

## 1.3 Simulationsmodell

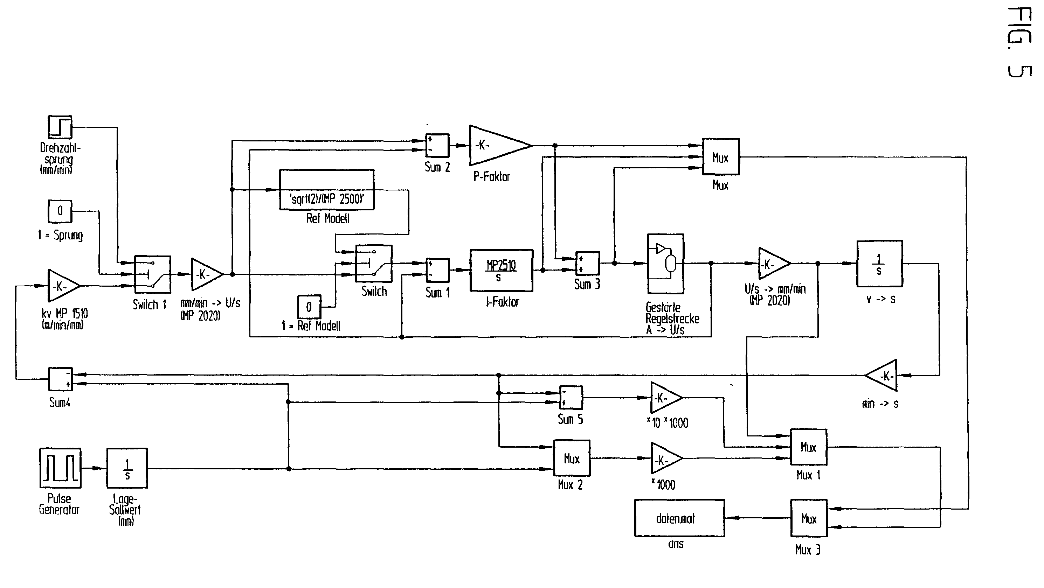

Das Simulationsmodell enthält eine geschlossene Lagereglerschleife. Zu Abgleichzwecken des Drehzahlreglers kann über Switch 1 ein Sprung von 200 mm/min auf den Drehzahlregler gegeben werden. Ein geeignetes Simulationsmodell für die Untersuchung eines Referenzmodelles 1. Ordnung ist in Figur 5 dargestellt. Mit dem Schalter vor Sum1 kann das IPC-Referenzmodell ein- und ausgeschaltet werden.

## 2. Bestimmung der Simulationsparameter

Für die Parametrierung der Regler mußten die Reglerverstärkungen ermittelt werden.

## 2.1 Abgleich des Drehzahlreglers

Zum Abgleich des Drehzahlreglers wurde das Störmoment der Regelstrecke vorübergehend auf 0 gesetzt und Switch 1 auf Sprung eingestellt. Die Sprunghöhe betrug 200 mm/min.
Für die Verstärkungsfaktoren für

| | |
|---|---|
| P-Faktor (Drehzahlregler) | = 9 |
| I-Faktor (Drehzahlregler) | = 2200 |

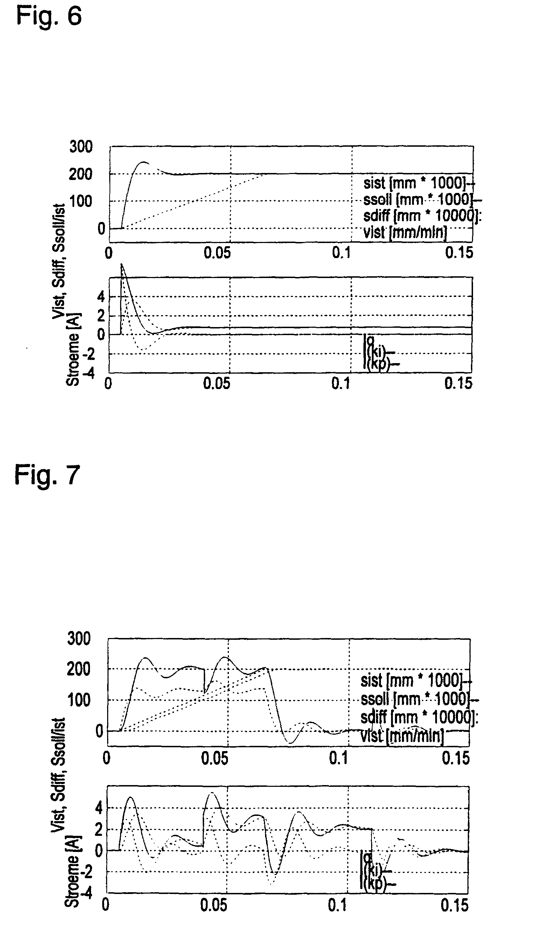

des Reglers ergab sich Verhältnisse wie in Figur 6 gezeigt.
Die Simulationsergebnisse entsprechen einem realen Antrieb. Die Anregelzeit wurde mit Ta = 4,6 ms bestimmt.

## 2.2 Bestimmung der Lagereglerverstärkung kV

Um die maximale Lagereglerverstärkung zu bestimmen, wurde der I-Anteil des Drehzahlreglers auf 0 gesetzt.

| Lagereglerverstärkung | = 15 |
|---|---|
| P-Faktor (Drehzahlregler) | = 9 |
| I-Faktor (Drehzahlregler) | = 0 |

Der kV-Faktor wurde so eingestellt, daß am Motor-Sollstrom Iq keine Schwingung auftrat.
An der Schleppfehler-Kurve in Figur 7 ist die geringe Störsteifigkeit ohne I-Anteil zu erkennen. Es findet keine vollständige Ausregelung der Störung statt.

### 2.3 Aktivieren des I-Anteils des Drehzahlreglers

Es wurde der I-Anteil des Drehzahlreglers aktiviert, ohne daß die Lagereglerverstärkung reduziert wurde

| Lagereglerverstärkung | = 15 |
|---|---|
| P-Faktor (Drehzahlregler) | = 9 |
| I-Faktor (Drehzahlregler) | = 2200 |

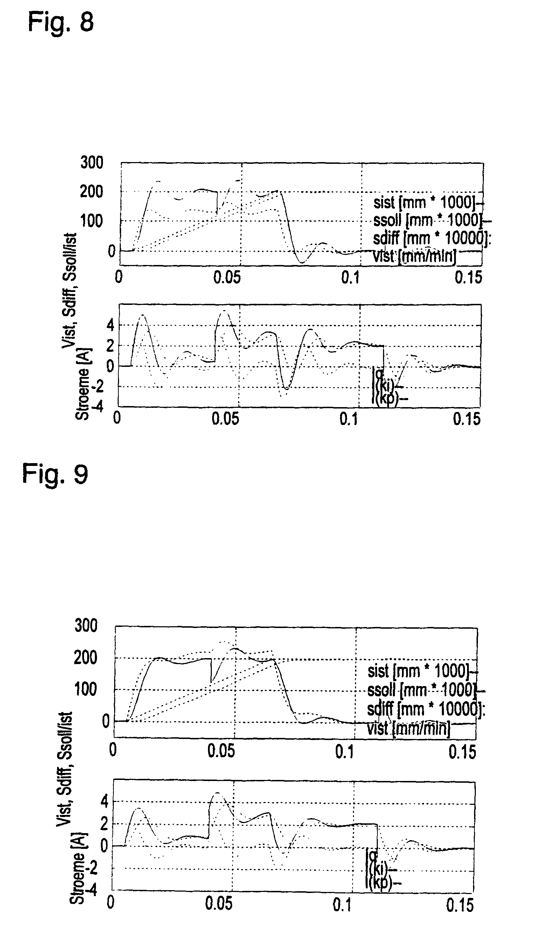

An den Motorströmen ist gemäß Figur 8 leicht zu erkennen, daß das System schwingt. Der kV-Faktor (oder der I-Anteil des Drehzahlreglers) muß reduziert werden.

### 2.4 Reduzierung der Lagereglerverstärkung

Es wurde der kV-Faktor des Lagereglers reduziert, bis keine Schwingneigung mehr auftrat.

| Lagereglerverstärkung | = 9 |
|---|---|
| P-Faktor (Drehzahlregler) | = 9 |
| I-Faktor (Drehzahlregler) | = 2200 |

Durch den geringeren kV-Faktor steigt der Schleppfehler (schlechtes Führungsverhalten), allerdings ist gegenüber einem System ohne I-Anteil die Störsteifigkeit verbessert (siehe Figur 9).

### 2.5 Vorschalten des IPC-Referenzmodells (1. Ordnung) vor den I-Anteil

Es wurde der kV-Faktor eingestellt, der anfangs ohne I-Anteil des Drehzahlreglers möglich war. Zusätzlich wurde der I-Anteil des abgeglichenen Drehzahlreglers eingestellt. Das Referenzmodell wurde 1. Ordnung realisiert (Vernachlässigung der Verlustrückführung der Regelstrecke).

| Lagereglerverstärkung | MP1510 [m/min/mm] | = 15 |
|---|---|---|
| P-Faktor (Drehzahlregler) | MP2500 [As] | = 9 |
| I-Faktor (Drehzahlregler) | MP2510 [A] | = 2200 |

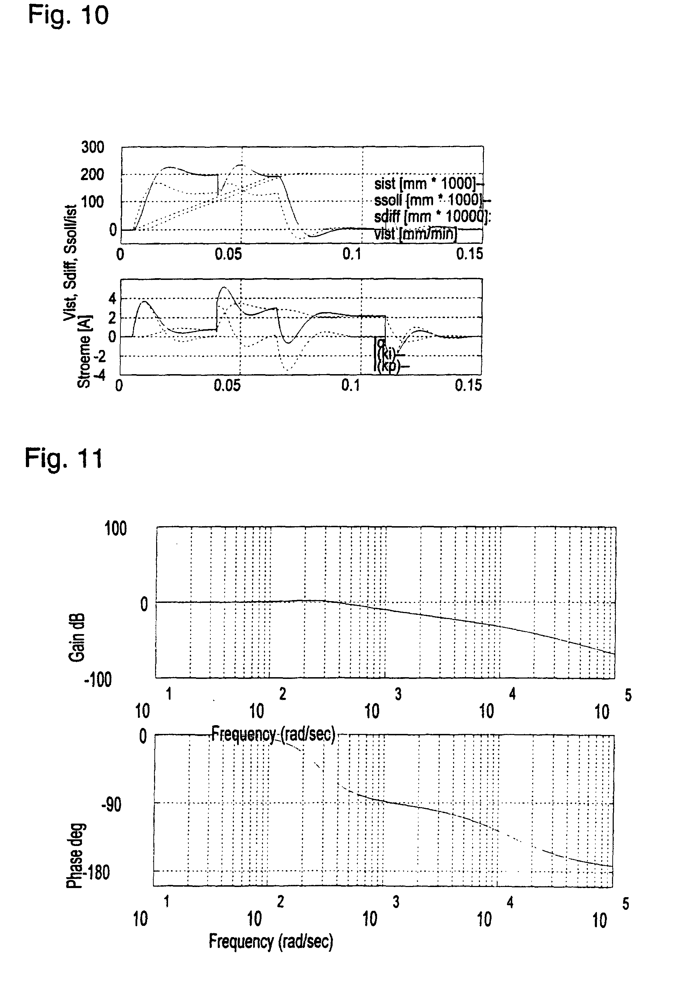

Aus dem Diagramm in Figur 10 kann abgelesen werden, daß bei geringem Schleppfehler eine hohe Störsteifigkeit gegeben ist.

### 3. Berechnung des IPC-Referenzmodells

Grundlage für das Referenzmodell ist, daß alle Anteile des P-Reglers incl. Strecke nicht an den Integrator gelangen. Deshalb wird ein vereinfachtes Modell der geschlossenen Reglerschleife (nur P-Regler aktiv) in die Sollvorgabe des Integrators eingefügt. Die Motorverluste werden nicht berücksichtigt.

### 3.1 Berechnung aus Modellparametern

Folgende physikalische Größen tauchen in dieser geschlossenen Reglerschleife auf:

P-Faktor Drehzahlregler: in [As/U]
Motorkonstante: kMC / sqrt(2) in [Nm/A]
Massenträgheitsmoment der Strecke JI

Die Übertragungsfunktion G(s) des offenen Regelkreises lautet somit:

$$G(s) = MP2500 * k_{MC} * \frac{1}{2 * \pi} * \frac{1}{J_l * s}$$

$$k'_p = MP2500 * k_{MC} * \frac{1}{2 * \pi}$$

$$G(s) = k'_p * \frac{1}{J_l * s}$$

Die Übertragungsfunktion H(s) des geschlossenen Regelkreises lautet:

$$H(s) = \frac{G(s)}{1 + G(s)}$$

$$H(s) = \frac{\dfrac{k'_p}{J_l * s}}{1 + \dfrac{k'_p}{J_l * s}}$$

$$H(s) = \frac{1}{1 + \dfrac{J_l}{K'_p} * s}$$

$$H(s) = \frac{1}{1 + T_1 * s}$$

Man erhält als IPC-Referenzmodell ein PT1-Glied mit der Zeitkonstante T1:

$$\boxed{T_l = \frac{J_l}{k'_p} = \frac{J_l * 2 * \pi}{MP2500 * k_{MC}}} \quad (F1)$$

### 3.2 Berechnung aus Maschinenparametern

Heidenhain-Steuerungen weisen eine über einen Maschinenparameter einstellbare Beschleunigungsvorsteuerung auf. Dieser Maschinenparameter MP26 gibt den Kehrwert der Winkelbeschleunigung a pro Strom in [As2/U] an. Über die Winkelbeschleunigung kann auf einfache Weise die Zeitkonstante des IPCs berechnet werden.
Mel = elektrisches Moment [Nm]
kMC = Motor-Momentenkonstante [Nm/A]
JI = Massenträgheitsmoment [kg.m2]
MP26 = Beschleunigungsvorsteuerung [As2/U]

$$M_{el} = I_{MOT} * k_{MC}$$

$$\alpha = \frac{M_{el}}{J_I}$$

$$\alpha = \frac{I_{MOT} *2* \pi}{MP26}$$

Gleichgesetzt ergibt sich:

$$\frac{J_I}{k_{MC}} = \frac{MP26}{2* \pi}$$

Dieses in (F1) eingesetzt:

$$T_1 = \frac{J_I}{k'_p} = \frac{J_I * 2* \pi}{MP25 * k_{MC}}$$

$$\boxed{T_1 = \frac{MP26}{MP25}} \quad \text{(F2)}$$

Obwohl der IPC zum Integralfaktor des Drehzahlreglers zuzuordnen ist, sollte der IPC-MP bei den Vorsteuerparametern liegen, da er erst eingesetzt werden kann, wenn MP26 ermittelt wurde.

## 4. Untersuchung des Phasenganges der Drehzahlreglerschleife

Für die Untersuchung des Phasenganges wird die Phasenverschiebung des geschlossenen Drehzahlregelkreises untersucht. Dazu wurde ein Simulationsmodell, das u.a. die Soll- und Istgeschwindigkeit beinhaltet benutzt. Dabei wurden folgende Phasengänge bestimmt.

### 4.1 Phasengang ohne IPC

In Figur 11 ist der Phasengang ohne IPC dargestellt. Man erkennt, daß sich erst bei -180° eine Grenze in der Phase ergibt. Zusammen mit zusätzlichen Verzögerungen, Totzeiten und großen Massen bei realen Systemen ergibt sich eine Reduzierung des Phasenrands durch den I-Anteil des Drehzahlreglers.

### 4.2 Phasengang mit IPC

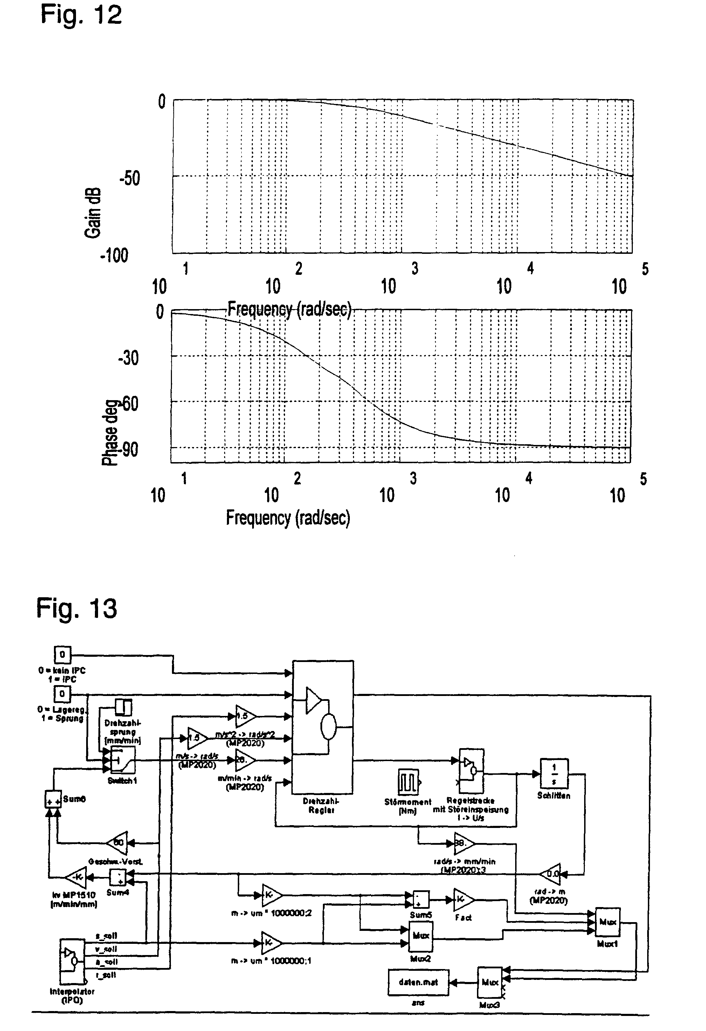

In Figur 12 ist der Phasengang mit IPC dargestellt. Die Phase wird mit IPC nur um max. -90° verschoben. Durch die Erhöhung des Phasenrandes ergibt sich eine bessere Stabilität (bzw. höherer kV) des Lagereglers.

### 5. Berücksichtigung des IPCs in der Vorsteuerung

Alle vorausgehenden Betrachtungen fanden ohne Vorsteuerungen (geschleppte Betriebsart) statt. Im folgenden wird die Vorsteuerung mit einbezogen.
Im Simulationsmodell wurde dazu aus Gründen der Übersicht der Drehzahlregler in einem eigenen Block realisiert und mit folgenden Eingängen (von oben nach unten) ausgestattet:

Ein-/Ausschalten des IPCs
Ein-/Ausschalten der Vorsteuerung
Beschleunigungsvorsteuerung aus Interpolator (IPO)
Geschwindigkeitsvorsteuerung aus IPO
Solldrehzahl

Istdrehzahl

Der Drehzahlreglerblock besitzt folgende Ausgänge:
Drei Signale (über Multiplexer) zum Beobachten der Ströme im Drehzahlregler
Momentenstromausgang Iq des Drehzahlreglers

In Figur 13 ist die Struktur der Lageregler-Simulation mit Vorsteuerung dargestellt. In den Lageregelkreis wurde noch die Geschwindigkeitsvorsteuerung (Sum6) integriert.

Durch Verbinden des Störmoments mit dem entsprechenden Eingang der Regelstrecke kann wie bisher eine Störung auf die Regelstrecke wirken.

Die Streckenvorgabe kommt aus dem Interpolatorblock (IPO). Über die Matlab-Datei "M_IPO.M" kann eine Parametrierung von Ruck, Beschleunigung, Geschwindigkeit und Strecke vorgenommen werden. "M_IPO.M" wird auch innerhalb von "M_IPC.M" aufgerufen.

**5.1 Schleppfehlersimulationen**

Im Folgenden werden die verschiedenen Vorsteuerungen nacheinander zugeschaltet. Um die Wirkung zu vergleichen, wurden alle Simulationsparameter konstant gehalten.

Streckenparameter:

| Momentenkonstante | Ktc [Nm/A] | = 1.5 * sqrt(2) |
|---|---|---|
| Last-Trägheitsmoment | JI [kg.m2] | = 9 |
| Drehzahl-Verluste | [Nm/ω] | = 0.15 |

Regelkreisparameter:

| Lagereglerverstärkung | MP1510 [m/min/mm] | = 9 |
|---|---|---|
| P-Faktor (Drehzahlregler) | MP2500 [As] | = 9 |
| I-Faktor (Drehzahlregler) | MP2510 [A] | = 2200 |

Interpolationsparameter:

| Ruck | r [m/s3] | = 2*103 |
|---|---|---|
| Beschleunigung | a [m/s2] | = 5 |
| Geschwindigkeit | v [m/s] | = 0.4 / 60 |
| Lage | s [m] | = 4*10-4 |

**5.1.1 Schleppfehler ohne Vorsteuerung**

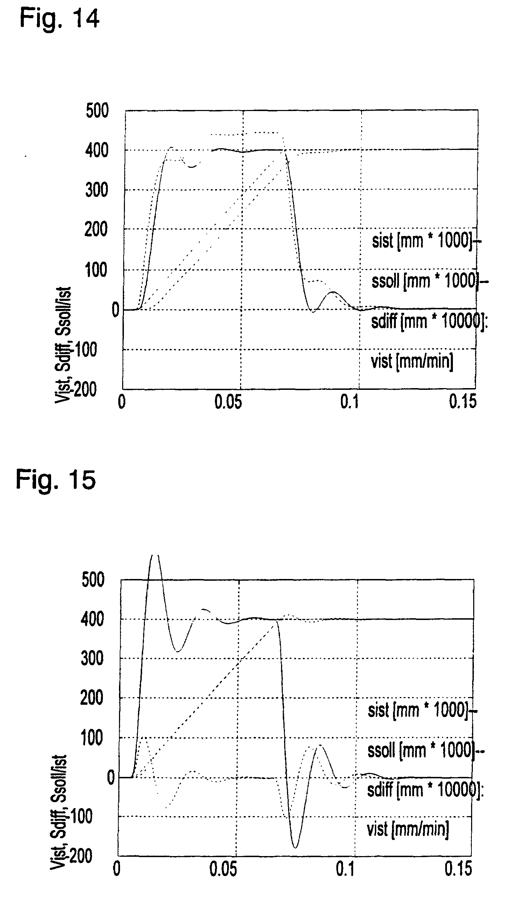

In Figur 14 ist der resultierende Schleppfehler ohne Vorsteuerungen veranschaulicht. Es ergibt sich ein maximaler Schleppfehler von ca. 45 um, der unzulässig hoch ist.

**5.1.2 Schleppfehler mit Geschwindigkeitsvorsteuerung**

In Figur 15 ist der resultierende Schleppfehler ohne Vorsteuerungen dargestellt. Es ergibt sich ein max. Schleppfehler während der Beschleunigungsphase von 10 um.

### 5.1.3 Schleppfehler mit Beschleunigungsvorsteuerung

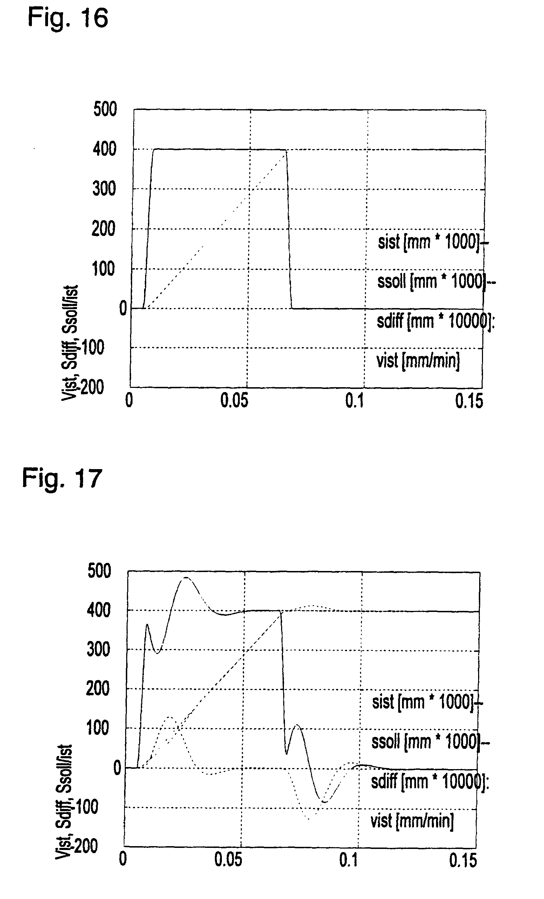

In Figur 16 ist der resultierende Schleppfehler mit Beschleunigungsvorsteuerung veranschaulicht. Ein Schleppfehler ist nicht wie erkennbar mehr nachweisbar.

### 5.1.4 Schleppfehler mit IPC (ohne IPC-Vorsteuerung)

In Figur 17 ist der resultierende Schleppfehler mit Vorsteuerung und IPC (ohne IPC-Vorsteuerung) veranschaulicht. Wie erkennbar baut sich am Ende der Beschleunigungsphase ein Schleppfehler von 13 µm auf.

### 5.2 Einbau einer IPC-Vorsteuerung in den Drehzahlregler

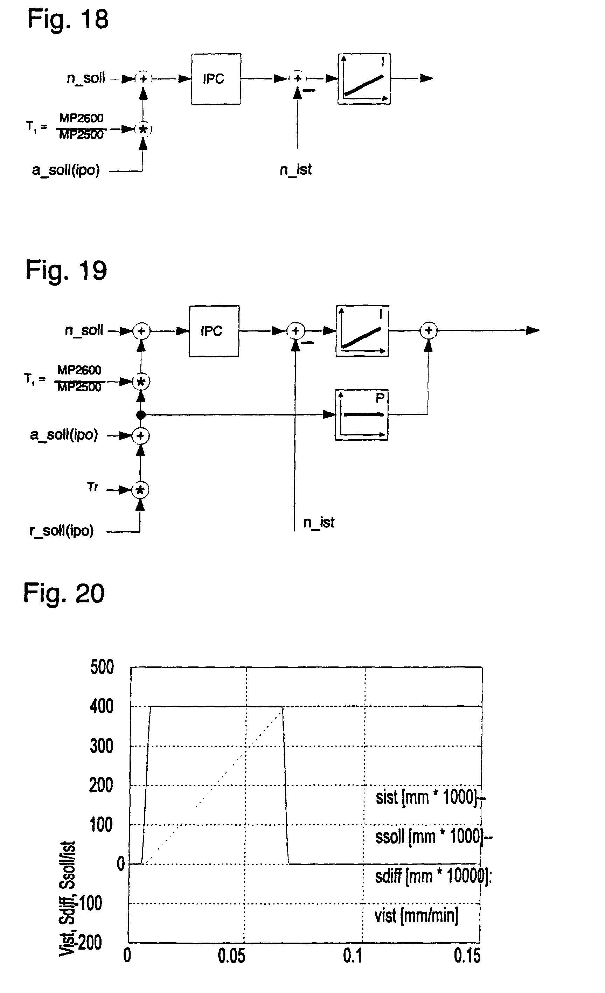

Um den Schleppfehler während der Beschleunigungsphase zu reduzieren, muß eine Beschleunigungsvorsteuerung implementiert werden. Da die Eingangsgröße des IPCs eine Geschwindigkeit ist, ist eine Multiplikation der Beschleunigungsvorsteuergröße a_soll(ipo) mit der IPC-Zeitkonstante T1 nötig.
Um eine rechenzeitoptimierte Implementation zu ermöglichen, wurde der Vorsteuer-Summierungspunkt vom Reglerausgang zum IPC-Eingang vorverlegt. dabei ergibt sich die in Figur 18 dargestellte Struktur, d.h. die IPC mit Beschleunigungsvorsteuerung.
Eine weitere Verbesserung des Schleppfehlers kann durch eine Ruck-Vorsteuerung erreicht werden. Die Vorsteuergröße "r_soll(ipo)" kann durch einfaches Differenzieren von "a_soll(ipo)" im Drehzahlregler gebildet werden. Der dabei entstehende zeitliche Fehler von einer halben Abtastzeit spielt nur eine untergeordnete Rolle.
In Figur 19 ist die IPC mit Beschleunigungs- und Ruck-Vorsteuerung dargestellt.

### 5.2.1 Schleppfehler mit konv. Vorsteuerung, IPC und IPC-Vorsteuerung

In der Simulation wurden die relevanten Vorteuerungen um obige Struktur erweitert und mit einer Struktur verglichen, bei welcher der Vorsteuerpunkt am Reglerausgang liegt. Dabei ergaben sich keine Unterschiede.
In Figur 20 ist der resultierende Schleppfehler mit konventioneller Vorsteuerung, IPC und IPC-Vorsteuerung veranschaulicht.
Wird der IPC-Vorsteuerzweig eingebaut, ergibt sich wiederum kein nachweisbarer Schleppfehler.

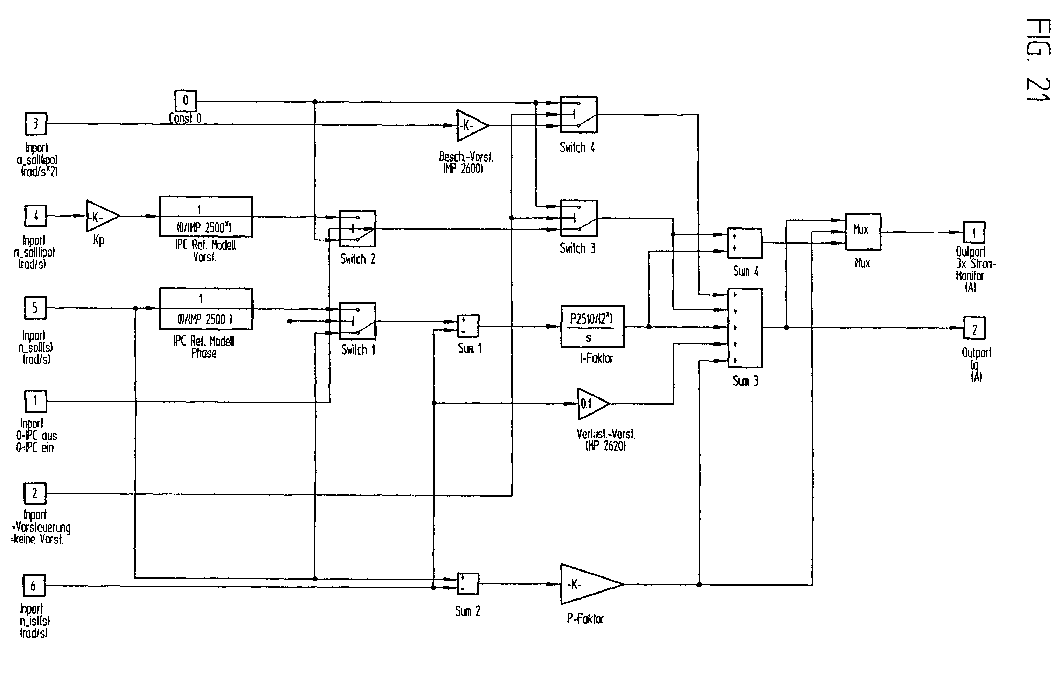

In Figur 21 ist die Struktur des Drehzahlregler-Blocks mit Vorsteuerung im Reglerausgang veranschaulicht.

### 6. Praktische Untersuchung des IPCs

Die praktischen Untersuchungen wurden an einer DIGMA 700 durchgeführt. Zuerst wurde ein IPC 1. Ordnung, wie er in obiger Simulation eingesetzt wurde, in die DSP-Software implementiert. Dabei ergaben sich nur geringe Vorteile bei Einsatz des IPCs, der Lageregler-kv konnte nur um ca. 15 % erhöht werden.
Es musste daher ein IPC mit höherer Ordnung eingesetzt werden, der den realen Streckenverhältnissen besser entspricht.

### 6.1 Einsatz eines IPCs 2. Ordnung

Eine Realisierung des IPCs mit 2. Ordnung wurde nach folgender Übertragungsfunktion eingesetzt:

$$H(s) = \frac{1}{1 + T_1 * s + T_2 * s^2}$$

Dies ist die Übertragungsfunktion eines schwingfähigen PT2s mit Dämpfung D.

$$D = \frac{\alpha}{\beta} = \frac{T_1}{2 * T_2}$$

Bei realen Werkzeugmaschinen ist eine gedämpfte Schwingung zu erwarten. Die Dämpfung D bewegt sich somit im Bereich 0 < D < 1.
Die Zeitkonstante T2 berechnet sich:

$$T_2 = \frac{T_1}{2 * D}$$

Bei Einsatz eines IPCs 2. Ordnung wurden bereits deutlich bessere Ergebnisse erzielt, diese kamen aber immer noch nicht an die Simulationsergebnisse heran, die auf eine theoretische Erhöhung der Lagereglerverstärkung kv auf ca. 170% schließen ließen. Dabei wurden für die DIGMA 700 folgende Zeitkonstanten ermittelt:

Zeitkonstanten an der DIGMA 700:

|       | X-Achse | Y-Achse | Z-Achse |
|-------|---------|---------|---------|
| MP25  | 15      | 15      | 12      |
| MP26  | 0.0212  | 0.0205  | 0.0165  |
| T1'   | 1       | 1       | 1       |

| T2' | 0.0017  | 0.0018  | 0.0018  |
|-----|---------|---------|---------|
| T1  | 1.41 ms | 1.37 ms | 1.37 ms |
| T2  | 1.7 ms  | 1.8ms   | 1.8ms   |
| D   | 0.41    | 0.39    | 0.38    |

Untenstehende Tabelle zeigt die erreichten Lagereglerverstärkungen (kV-Faktoren) an der X-Achse der DIGMA 700 bei verschiedenen IPC-Ausführungen. Dabei wurde immer die Schwinggrenze gesucht. Für einen stabilen Betrieb ist diese nach einer Faustregel mit Faktor 0.65 zu multiplizieren.

|                          | kV (Schwinggrenze) | kV (stabil) |
|--------------------------|--------------------|-------------|
| ohne IPC                 | 8.5                | 5.5         |
| IPC 1. Ordnung           | 9.5                | 6.2         |
| IPC 2. Ordnung (D = 0.5) | 13.0               | 8.5         |
| IPC 2. Ordnung (D = 0.41)| 14.5               | 9.5         |

Die Lagereglerverstärkung konnte somit auf 170% erhöht werden.

**6.2 Herleitung des IPC-Algorithmus**

Die Herleitung des IPC-Algorithmus erfolgt ausgehend von der Gleichung:

$$H(s) = 1 / (1 + T1 * s + T2^2 * s^2)$$

Bestimmung der T2-Zeitkonstante

Versuche an der DIGMA 700 haben gezeigt, daß die T2-Zeitkonstante und somit die Dämpfung dann optimal eingestellt war, wenn der Schleppfehler in der Ruck-Phase minimale Abweichung zeigte (mit integrierter Ruck-Vorsteuerung). Bei allen drei Achsen konnte auf diese Art die T2-Zeitkonstante bestimmt werden.
Am Laboraufbau konnte (JL direkt auf Motorwelle) konnte ebenfalls auf diese Art eine Bestimmung der optimalen T2-Zeitkonstante durchgeführt werden.
Zusammenhang zwischen Dämpfung und T2-Zeitkonstante:

$$D = \frac{T_1}{2 * T_2}$$

**6.3 Einsatz an Maschinen mit dominanter Eigenfrequenz**

Eine weitere Einsatzmöglichkeit des IPCs ist gegeben, wenn man für Maschinen mit tiefer Eigenresonanz und schlechter Dämpfung die IPC-Zeitkonstanten auf die Regelstrecke abstimmt.

Bei ersten Untersuchungen an der "Chiron FZ 22 L" in der Fertigung konnte dabei der kV-Faktor von 1 auf 5 erhöht werden. Allerdings konnte in diesem Fall nicht die aus MP26 und MP25 ermittelte Zeitkonstante T1 eingesetzt werden. Es mußte eine wesentlich höhere Zeitkonstante (ca. Faktor 5) eingesetzt werden, welche eine Zeitkonstante in der Maschine kompensiert.

Zusätzlich zur "Chiron FZ 22 L" wurde noch eine zweite Maschine, eine Deckel-Maho "DMU 50 V" untersucht.

Die Maschine Deckel-Maho "DMU 50 V" weist starke Resonanzen bei 42 Hz und 50 Hz auf. Diese sind so dominant, daß nur ein Ruck von 10 und eine Beschleunigung von 1.5 bei kV = 4 eingestellt werden kann. Durch Einsatz des IPCs konnte für alle Achsen ein kV von 12 erreicht werden. Die Werte für Ruck konnten auf 20 erhöht werden, die Beschleunigung wurde auf 3 angehoben.

Zeitkonstanten an der DMU 50 V:

|       | X-Achse | Y-Achse | Z-Achse |
|-------|---------|---------|---------|
| MP25  | 15      | 4.8     | 5.4     |
| MP26  | 0.045   | 0.016   | 0.016   |
| T1'   | 0.0042  | 0.0052  | 0.0052  |
| T2'   | 0.003   | 0.0022  | 0.0013  |
| T1    | 4.2 ms  | 5.2 ms  | 5.2 ms  |
| T2    | 3.0 ms  | 2.2 ms  | 1.3 ms  |
| D     | 0.70    | 1.18    | 2.00    |

Die Drehzahlreglereinstellungen wurden nicht verändert (org. Deckel-Maho).

Fazit: Bei beiden Maschinen konnte eine deutliche Verbesserung im Lagereglerverhalten durch Einsatz des IPCs erreicht werden.

**7. IPC-Abgleich**

Bei Einsatz des IPCs muß man zwischen zwei Maschinentypen unterscheiden. Typ 1 ist eine steife Maschine nicht zu großer Bauart, die meist direkt angetrieben ist oder Linearmotoren besitzt. Typ 2 ist eine Maschine mit dominanter Eigenfrequenz im Bereich 15 Hz .. 80 Hz, an der kein ausreichend großer kV-Faktor eingestellt werden kann.

**7.1 Abgleich an steifen Maschinen**

Bei Maschinen vom Typ 1 reicht es in der Regel, wenn der IPC mit T1' = 1 und T2' = 0 eingeschaltet wird. Der kV-Faktor wird so lange erhöht, bis eine deutliche Schwingneigung beim Verfahren zu beobachten ist.

Wenn dieser kV-Faktor gefunden wurde, erfolgt ein Feinabgleich der IPC-Zeitkonstante T2. Dazu wird zuerst ein T2-Startwert von

$$T2 = \frac{2}{3} * \frac{MP26}{MP25}$$

eingestellt. Anschließend wird T2' solange verändert, bis ein neuer maximaler kV-Faktor gefunden ist. Üblicherweise muß bei diesem Maschinentyp die T2-Zeitkonstante reduziert werden (bis max. 0.5 x Startwert). Es ist aber auch eine Erhöhung gegenüber dem Startwert denkbar.

Zum Abschluß ist der kV-Faktor für die Schwinggrenze mit Faktor 0.65 zu multiplizieren, um eine ausreichende Stabilität des Lagereglers sicherzustellen.

Bei diesem Maschinentyp ist eine Erhöhung des kV's um Faktor 1.4 .. 1.7 möglich.

**7.2 Abgleich an Maschinen mit dominanter Eigenfrequenz**

Bei Maschinen vom Typ 2 ist zunächst der gleiche Abgleich durchzuführen wie bei Maschinen vom Typ 1. Der IPC muß mit T1' = 1 eingeschaltet werden und es gilt, T2 zu ermitteln. Hierbei ist auch möglich, daß sich eine T2-Zeitkonstante ergibt, welche deutlich größer als der T2-Startwert ist.

Nun muß die T1-Zeitkonstante ermittelt werden. Dazu ist anstelle der 1 ein T1-Startwert in MP2602 einzutragen. Dieser errechnet sich aus

$$T1 = \frac{MP26}{MP25}$$

Dieser Startwert ist solange zu erhöhen, bis ein maximaler kV-Faktor gefunden ist. Ist die gefundene T1-Zeitkonstante deutlich größer als der Startwert (> Faktor 2), sollte erneut ein Abgleich der T2-Zeitkonstante erfolgen. Dazu ist der bisher gefundene Wert versuchsweise zu erniedrigen bzw. zu erhöhen.

Zum Abschluß ist der kV-Faktor für die Schwinggrenze mit Faktor 0.65 zu multiplizieren, um eine ausreichende Stabilität des Lagereglers sicherzustellen.

Bei Maschinen vom Typ 2 ist auch eine größere Steigerung des kV's als Faktor 1.7 möglich.

**Patentansprüche**

1.  Verfahren zur Ermittlung von mindestens einer Zeitkonstanten eines Referenzmodelles, ausgebildet als Verzögerungsglied 2. Ordnung, das in einer kaskadierten Regelungsanordnung einer Maschine zwischen einem Lageregler mit einem Verstärkungsfaktor und einem Drehzahlregler angeordnet ist, der einen Proportionalzweig und einen Integralzweig umfasst und wobei das Referenzmodell zumindest im wesentlichen das Verhalten des geschlossenen Drehzahlregelkreises ohne Berücksichtigung des Integralanteiles nachbildet,
    **dadurch gekennzeichnet,**
    **dass** ein optimierter Wert (T2_OPT) einer Zeitkonstanten (T2) des Referenzmodelles in Abhängigkeit einer erfassten Schwingungsfrequenz ($f_{S1}$, $f_{S2}$) einer ungedämpften Maschinenschwingung ermittelt wird.

2.  Verfahren nach Anspruch 1, **dadurch gekennzeichnet, dass**

    -   Startwerte $T1\_0_1$, $T2\_0_1$ für die zwei Zeitkonstanten (T1, T2) des Referenzmodelles vorgegeben werden,
    -   anschließend der Verstärkungsfaktor (kV) des Lagereglers schrittweise bis zu einem ersten maximalen Verstärkungsfaktor ($kV_{max1}$) erhöht wird, bei dem eine ungedämpfte Maschinenschwingung registrierbar ist,
    -   die Schwingungsfrequenz ($f_{S1}$) der ungedämpften Maschinenschwingung erfasst wird,
    -   der optimierte Wert einer Zeitkonstanten (T2_OPT) als Funktion der Schwingungsfrequenz ($f_{S1}$) bestimmt wird.

3.  Verfahren nach Anspruch 2, **dadurch gekennzeichnet, dass** die Startwerte für die Zeitkonstanten (T1, T2) gemäß $T1\_0_1 = 0$ und $T2\_0_1 = 0$ vorgegeben werden.

4.  Verfahren nach Anspruch 2, **dadurch gekennzeichnet, dass** der optimierte Wert der zweiten Zeitkonstanten (T2_OPT) gemäß der Beziehung

$$T2\_OPT = f(f_{S1}) = 1 / (2 * \pi * f_{S1})$$

bestimmt wird.

5.  Verfahren nach Anspruch 1, **dadurch gekennzeichnet, dass** die andere, erste Zeitkonstante (T1) des Referenzmodelles aus vorgegebenen System-Parametern bestimmt wird.

6.  Verfahren nach Anspruch 5, **dadurch gekennzeichnet, dass** die andere, erste Zeitkonstante (T1) des Referenzmodelles gemäß der Beziehung

$$T1\_OPT = (J_L * 2 * \pi) / (k_P * K_{MC})$$

bestimmt wird, wobei

$J_L$: Lastmoment,

$k_P$: Verstärkungsfaktor des Proportionalzweiges des Drehzahlreglers,

$K_{MC}$: Motorkonstante.

7. Verfahren nach Anspruch 5, **dadurch gekennzeichnet, dass** nachfolgend überprüft wird, ob die vorher ermittelten Zeitkonstanten (T1_OPT, T2_OPT) des Referenzmodelles das gewünschte Führungsverhalten der Regelungsanordnung gewährleisten.

8. Verfahren nach Anspruch 7, **dadurch gekennzeichnet, dass** hierzu unter Verwendung der optimierten Zeitkonstanten (T1_OPT, T2_OPT) der Verstärkungsfaktor (kV) solange erhöht wird, bis eine ungedämpfte Maschinenschwingung registrierbar ist und der zugehörige Verstärkungsfaktor als zweiter maximaler Verstärkungsfaktor ($kV_{max2}$) im nachfolgenden Regelungsbetrieb verwendet wird.

9. Verfahren nach Anspruch 8, **dadurch gekennzeichnet, dass** der ermittelte zweite, maximale Verstärkungsfaktor ($kV_{max2}$) zur Verwendung im Regelungsbetrieb mit einem Sicherheitsfaktor K multipliziert wird, wobei K < 1.

10. Verfahren nach Anspruch 5, **dadurch gekennzeichnet, dass** nachfolgend überprüft wird, ob die gewählte erste Zeitkonstante (T1_OPT) ein akzeptables Systemverhalten liefert oder aber eine Optimierung der ersten Zeitkonstante (T1) vorgenommen werden muss.

11. Verfahren nach Anspruch 10, **dadurch gekennzeichnet, dass** im Fall einer erforderlichen Optimierung der ersten Zeitkonstante (T1) ausgehend von einem vorgegebenem Startwert ($T1\_0_2$) für die erste Zeitkonstante die erste Zeitkonstante (T1) solange schrittweise verändert wird, bis eine ungedämpfte Maschinenschwingung registrierbar ist und der daraus erhaltene Wert der ersten Zeitkonstanten (T1) als optimierter Wert (T1_OPT) zur Parametrierung des Referenzmodelles verwendet wird.

12. Verfahren nach Anspruch 11, **dadurch gekennzeichnet, dass** unter Verwendung der optimierten zweiten Zeitkonstante (T2_OPT) und der aktuellen ersten Zeitkonstante (T1) der Verstärkungsfaktor (kV) solange erhöht wird, bis eine ungedämpfte Maschinenschwingung registrierbar ist und der zugehörige Verstärkungsfaktor als zweiter maximaler Verstärkungsfaktor ($kV_{max2}$) im nachfolgenden Regelungsbetrieb verwendet wird.

13. Verfahren nach einem der vorhergehenden Ansprüche, **dadurch gekennzeichnet, dass** das Verfahren automatisiert durchgeführt wird.

14. Verwendung eines parametrierten Referenzmodelles, ausgebildet als Verzögerungsglied 2. Ordnung, in einer kaskadierten Regelungsanordnung einer Maschine zwischen einem Lageregler mit einem Verstärkungsfaktor und einem Drehzahlregler, der einen Proportionalzweig und einen Integralzweig umfasst und wobei das Referenzmodell zumindest im wesentlichen das Verhalten des geschlossenen Drehzahlregelkreises ohne Berücksichtigung des Integralanteiles nachbildet,
**dadurch gekennzeichnet,**
**dass** zur Parametrierung des Referenzmodelles ein optimierter Wert (T2_OPT) einer Zeitkonstanten (T2) des Referenzmodelles in Abhängigkeit einer erfassten Schwingungsfrequenz ($f_{S1}$, $f_{S2}$) einer ungedämpften Maschinenschwingung ermittelt wird.

15. Verwendung eines Referenzmodelles, das nach Anspruch 14 parametriert wurde, in einer kaskadierten Regelungsanordnung einer Maschine, wobei die Maschine theoretisch ein Referenzmodell n-ter Ordnung erfordern würde, wobei n > 2 gilt.

16. Vorrichtung, geeignet zur Ermittlung von mindestens einer Zeitkonstanten eines Referenzmodelles, ausgebildet als Verzögerungsglied 2. Ordnung, das in einer kaskadierten Regelungsanordnung einer Maschine zwischen einem Lageregler mit einem Verstärkungsfaktor und einem Drehzahlregler angeordnet ist, der einen Proportionalzweig und einen Integralzweig umfasst und wobei das Referenzmodell zumindest im wesentlichen das Verhalten des geschlossenen Drehzahlregelkreises ohne Berücksichtigung des Integralanteiles nachbildet,
**dadurch gekennzeichnet,**
**dass** die Vorrichtung die Ermittlung eines optimierter Wert (T2_OPT) einer Zeitkonstanten (T2) des Referenzmodelles in Abhängigkeit einer erfassten Schwingungsfrequenz ($f_{S1}$, $f_{S2}$) einer ungedämpften Maschinenschwingung gestattet.

**Claims**

1. Method for determining at least one time constant of a reference model, which is designed as a 2nd order time-delay element and is arranged in a cascaded control arrangement of a machine between a position control device with a loop gain and a speed control device, which comprises a proportional branch and an integral branch, and wherein the reference model at least substantially simulates the behaviour of the closed speed control circuit without taking the integral portion into consideration,
**characterised in that**
an optimised value (T2_OPT) of a time constant (T2) of the reference model is determined as a function of a detected oscillation frequency ($f_{S1}$, $f_{S2}$) of an undamped machine oscillation.

2. Method according to claim 1, **characterised in that**

   - starting values $T1\_0_1$, $T2\_0_1$ are preset for the two time constants (T1, T2) of the reference model,
   - then the loop gain (kV) of the position control device is increased in steps up to a first maximum loop gain ($kV_{max1}$), at which an undamped machine oscillation can be registered,
   - the oscillation frequency ($f_{S1}$) of the undamped machine oscillation is detected,
   - the optimised value of a time constant (T2_OPT) is determined as a function of the oscillation frequency ($f_{S1}$).

3. Method according to claim 2, **characterised in that** the starting values for the time constants (T1, T2) are preset in accordance with $T1\_0_1 = 0$ and $T2\_0_1 = 0$.

4. Method according to claim 2, **characterised in that** the optimised value of the second time constant (T2_OPT) is determined in accordance with the equation

$$T2\_OPT = f(f_{S1}) = 1/(2*\pi*f_{S1}).$$

5. Method according to claim 1, **characterised in that** the other, first time constant (T1) of the reference model is determined from preset system parameters.

6. Method according to claim 5, **characterised in that** the other, first time constant (T1) of the reference model is determined in accordance with the equation

$$T1\_OPT = (J_L*2*\pi)/(k_p*K_{MC})$$

wherein

$J_{L:}$      Momentary load,
$k_{p:}$      Loop gain of the proportional branch of the speed control device,
$K_{MC}$:      Motor constant.

7. Method according to claim 5, **characterised in that** a check is subsequently made as to whether the previously determined time constants (T1_OPT, T2_OPT) of the reference model ensure the desired control behaviour of the control arrangement.

8. Method according to claim 7, **characterised in that** for this purpose the loop gain (kV) is increased, using the optimised time constants (T1_OPT, T2_OPT), until an undamped machine oscillation can be registered and the associated loop gain is used as the second maximum loop gain ($kV_{max2}$) during the subsequent control operation.

9. Method according to claim 8, **characterised in that** the determined second maximum loop gain ($kV_{max2}$) is multiplied by a safety factor K for use in the control operation, wherein K < 1.

10. Method according to claim 5, **characterised in that** a check is subsequently made as to whether the selected first time constant (T1_OPT) delivers an acceptable system behaviour, or whether an optimisation of the first time constant (T1) must be performed.

**11.** Method according to claim 10, **characterised in that** in the event of a required optimisation of the first time constant (T1), proceeding from a preset starting value (T1_$0_2$) for the first time constant, the first time constant (T1) is changed in steps until an undamped machine oscillation can be registered, and the value of the first time constant (T1) obtained therefrom is used as the optimised value (T1_OPT) for the parameterisation of the reference model.

**12.** Method according to claim 11, **characterised in that**, using the optimised second time constant (T2_OPT) and the current first time constant (T1), the loop gain (kV) is increased until an undamped machine oscillation can be registered and the associated loop gain is used as the second maximum loop gain ($kV_{max2}$) in the subsequent control operation.

**13.** Method according to one of the preceding claims, **characterised in that** the method is accomplished in an automated manner.

**14.** Use of a parameterised reference model, designed as a 2nd order time-delay element, in a cascaded control arrangement of a machine between a position control device with a loop gain and a speed control device, which comprises a proportional branch and an integral branch, and wherein the reference model at least substantially simulates the behaviour of the closed speed control circuit without taking the integral portion into consideration, **characterised in that**
for the parameterisation of the reference model, an optimised value (T2_OPT) of a time constant (T2) of the reference model is determined as a function of a detected oscillation frequency ($f_{S1}$, $f_{S2}$) of an undamped machine oscillation.

**15.** Use of a reference model, which has been parameterised according to claim 14, in a cascaded control arrangement of a machine, wherein the machine would theoretically require an nth order reference model, wherein n > 2 applies.

**16.** Device for determining at least one time constant of. a reference model, which is designed as a 2nd order time-delay element and is arranged in a cascaded control arrangement of a machine between a position control device with a loop gain and a speed control device, which comprises a proportional branch and an integral branch, and wherein the reference model at least substantially simulates the behaviour of the closed speed control circuit without taking the integral portion into consideration,
**characterised in that**
the device permits the determination of an optimised value (T2_OPT) of a time constant (T2) of the reference model as a function of a detected oscillation frequency ($f_{S1}$, $f_{S2}$) of an undamped machine oscillation.

## Revendications

**1.** Procédé pour déterminer au moins une constante de temps d'un modèle de référence conformé en élément de retard d'ordre 2, qui est inséré dans un système de régulation en cascade d'une machine, entre un régulateur de position avec un facteur d'amplification et un régulateur de vitesse de rotation comprenant une branche proportionnelle et une branche intégrale, le modèle de référence reproduisant au moins essentiellement le comportement du circuit de régulation de vitesse en boucle fermée sans tenir compte de la partie intégrale,
**caractérisé par le fait**
**qu'**on détermine une valeur optimisée (T2_OPT) d'une constante de temps (T2) du modèle de référence en fonction d'une fréquence d'oscillation ($f_{s1}$, $f_{s2}$) mesurée d'une oscillation non amortie de la machine.

**2.** Procédé selon la revendication 1, **caractérisé par le fait**
**qu'**on prédéfinit des valeurs de départ T1_$0_1$, T2_$0_1$ pour les deux constantes de temps (T1, T2) du modèle de réfrence,
puis on augmente pas à pas le facteur d'amplification (kV) du régulateur de position jusqu'à un premier facteur d'amplification ($kV_{max1}$) maximal pour lequel on enregistre une oscillation machine non amortie,
on mesure la fréquence d'oscillation ($f_{s1}$) de l'oscillation machine non amortie,
on détermine la valeur optimisée d'une constante de temps (T2_OPT) en fonction de la fréquence d'oscillation ($f_{s1}$).

**3.** Procédé selon la revendication 2, **caractérisé par le fait qu'**on prédéfinit les valeurs de départ pour les constantes de temps (T1, T2) conformément à T1_$0_1$=0 et T2_$0_1$=0.

**4.** Procédé selon la revendication 2, **caractérisé par le fait qu'**on détermine la valeur optimisée des deux constantes de temps (T2_OPT) conformément à la relation

$$T2\_OPT = f(f_{s1}) = 1/(2*\pi*f_{s1}).$$

**5.** Procédé selon la revendication 1, **caractérisé par le fait qu'**on détermine l'autre, première constante de temps (T1) du modèle de référence à parir de paramètres sytème prédéfinis.

**6.** Procédé selon la revendication 5, **caractérisé par le fait qu'**on détermine l'autre, première constante de temps (T1) du modèle de référence conformément à la relation

$$T1\_OPT = (J_L*2*\pi)/(kp*K_{MC})$$

avec

$J_L$:     moment de la charge,
$K_p$:     facteur d'amplification de la branche proportionnelle du régulateur de vitesse de rotation,
$K_{MC}$:     constante du moteur.

**7.** Pròcédé selon la revendication 5, **caractérisé par le fait qu'**on vérifie ensuite si les constantes de temps (T1_OPT, T2_OPT) du modèle de référence déterminées antérieurement assurent le comportement de réglage recherché du système de régulation.

**8.** Procédé selon la revendication 7, **caractérisé par le fait qu'**on augmente le facteur d'amplification (kV) en utilisant les constantes de temps optimisées (T1_OPT, T2_OPT) jusqu'à ce qu'à obtention d'une oscillation machine non amortie et on utilise le facteur d'amplification associé comme deuxième facteur d'amplification ($kV_{max2}$) maximal dans le processus de régulation consécutif.

**9.** Procédé selon la revendication 8, **caractérisé par le fait qu'**on multiplie le deuxième facteur d'amplification ($kV_{max2}$) maximal déterminé par un facteur de sécurité K pour son utilisation dans le processus de régulation, K<1.

**10.** Procédé selon la revendication 5, **caractérisé par le fait qu'**on vérifie ensuite si la première constante de temps (T1_OPT) sélectionnée fournit un comportement acceptable du système ou bien s'il est nécessaire de procéder à une optimisation de la.première constante de temps (T1).

**11.** Procédé selon la revendication 10, **caractérisé par le fait que** dans le cas d'une optimisation nécessaire de la première constante de temps (T1), partant d'une valeur de départ (T1_O2) prédéfinie pour la première constante de temps, on fait varier pas à pas la première constante de temps (T1) jusqu'à ce qu'à obtention d'une oscillation machine non amortie et on utilise la valeur ainsi obtenue de la première constante de temps (T1) comme valeur optimisée (T1_OPT) pour le paramétrage du modèle de référence.

**12.** Procédé selon la revendication 11, **caractérisé par le fait qu'**en utilisant la deuxième constante de temps optimisée (T2_OPT) et la première constante de temps (T1) actuelle, on augmente le facteur d'amplification (kV) jusqu'à ce qu'on enregistre une oscillation machine non amortie et on utilise le facteur d'amplification associé comme deuxième facteur d'amplification maximal ($kV_{max2}$) dans le processus de régulation consécutif.

**13.** Procédé selon une des revendications précédentes, **caractérisé en ce que** le procédé est exécuté de manière automatisée.

**14.** Utilisation d'un modèle de référence paramétré, conformé en élément de retard d'ordre 2, dans un système de régulation en cascade d'une machine, entre un régulateur de position avec un facteur d'amplification et un régulateur de vitesse de rotation, qui comprend une branche proportionnelle et une branche intégrale, le modèle de référence reproduisant au moins essentiellement le comportement du circuit de régulation de vitesse en boucle fermée sans tenir compte de la partie intégrale, **caractérisé par le fait que** pour paramétrer le modèle de référence, on détermine une valeur optimisée (T2_OPT) d'une constante de temps (T2) du modèle de référence en fonction d'une fréquence d'oscillation ($f_{s1}$, $f_{s2}$) mesurée d'une oscillation non amortie de la machine.

**15.** Utilisation d'un modèle de référence paramétré conformément à la revendication 14 dans un système de régulation en cascade d'une machine, la machine requérant en théorie un modèle de référence d'ordre n, avec n>2.

**16.** Dispositif adapté pour déterminer au moins une constante de temps d'un modèle de référence conformé en élément de retard d'ordre 2, qui est disposé dans un système de régulation en cascade d'une machine, entre un régulateur de position avec un facteur d'amplification et un régulateur de vitesse de rotation comprenant une branche proportionnelle et une branche intégrale, le modèle de référence reproduisant au moins essentiellement le comportement du circuit de régulation de vitesse en boucle fermée sans tenir compte de la partie intégrale,
**caractérisé par le fait**
**que** le dispositif permet de déterminer une valeur optimisée (T2_OPT) d'une constante de temps (T2) du modèle de référence en fonction d'une fréquence d'oscillation ($f_{s1}$, $f_{s2}$) mesurée d'une oscillation non amortie de la machine.

FIG. 1

# FIG. 2a

```
                    ERMITTLUNG T2_OPT

S10          STARTWERT T1_0₁ = 0
             STARTWERT T2_0₁ = 0

S20          kV schrittweise erhöhen

                    Ungedämpfte
S30             Maschinenschwingung ?        NEIN

        kVₘₐₓ ₁    JA

S40          Schwingungsfrequenz f_S1
             bestimmen

S50          T2_OPT = f ( f_S1 )
             T1_OPT = ...

S65   T2_OPT = f ( f_S2 )
                    Ungedämpfte
              Maschinenschwingung bei
         JA   Verwendung von T1_OPT, T2_OPT
              und kVₘₐₓ ₁ ?
S60
                        NEIN

S70          kV schrittweise erhöhen

                    Ungedämpfte
S80             Maschinenschwingung ?        NEIN

        kVₘₐₓ ₂    JA

S85          T2_OPT
             T1_OPT                          PT2
             kV_OPT = K kVₘₐₓ ₂
```

Fig. 2b

# FIG. 2b

Fig. 2a

| | |
|---|---|
| | ERMITTLUNG T1_OPT' |
| S90 | STARTWERT $T1\_0_2 = T1\_OPT$ |
| S100 | T1 schrittweise verändern |
| S110 | kV schrittweise erhöhen |
| S120 | Ungedämpfte Maschinenschwingung ? |
| S135 | $kV_{max\ 3} = kV_{max\ 2}$ |
| S130 | $kV_{max\ 3} > kV_{max\ 2}$ ? |
| S140 | T1_OPT' |
| | ENDE |

NEIN

$kV_{max\ 3}$    JA

JA

NEIN

PT2: T1_OPT', T2_OPT

FIG. 3

| | | | | |
|---|---|---|---|---|
| Iq | Moment-Konst. (Nm/A) | Sum2 | Regelstrecke | Sum3 |

Drehz. abh. Verluste f(n)

Omega -> U/s

Nist

Störmoment

Ms

FIG. 4

Iq

Störmoment (Nm)

Regelstrecke mit Störeinspeisung I -> U/s

nist (U/s)

FIG. 5

## Fig. 6

## Fig. 7

# Fig. 8

# Fig. 9

## Fig. 10

## Fig. 11

## Fig. 12

## Fig. 13

## Fig. 14

## Fig. 15

## Fig. 16

## Fig. 17

## Fig. 18

## Fig. 19

## Fig. 20

# FIG. 21